# EUROPÄISCHE PATENTSCHRIFT

(11) **EP 1 608 940 B1**
(45) Veröffentlichungstag und Bekanntmachung des Hinweises auf die Patenterteilung: **18.04.2007**
(21) Anmeldenummer: 04722860.6
(22) Anmeldetag: 24.03.2004
(51) Int. Cl.: G01L 5/22, B60Q 1/44, B60T 7/04

(54) **VORRICHTUNG ZUM ERFASSEN EINER BETÄTIGUNGSKRAFT EINES BREMSPEDALS UND BREMSANLAGE**
DEVICE FOR THE DETECTION OF AN ACTUATION FORCE OF A BRAKE PEDAL AND BRAKE SYSTEM
DISPOSITIF POUR SAISIR LA FORCE D'ACTIONNEMENT D'UNE PEDALE DE FREIN ET SYSTEME DE FREINAGE

(30) Priorität: 02.04.2003 DE 10315073
(43) Veröffentlichungstag der Anmeldung: 28.12.2005
(73) Patentinhaber: Lucas Automotive GmbH, 56070 Koblenz (DE)
(72) Erfinder: OHLIG, Benedikt, 56179 Vallendar (DE); GIERING, Wilfried, 56743 Mendig (DE)
(74) Vertreter: Thum, Bernhard
(86) Internationale Anmeldenummer: PCT/EP2004/003139
(87) Internationale Veröffentlichungsnummer: WO 2004/088263

(56) Entgegenhaltungen:
- WO-A-99/10215
- DE-A- 3 924 327
- DE-A- 4 130 383
- US-A1- 2003 041 725

## Beschreibung

Die vorliegende Erfindung betrifft eine Vorrichtung zum Erfassen einer Betätigungskraft eines Bremspedals mit den Merkmalen des Oberbegriffs des Patentanspruchs 1.

Fahrzeugbremsanlagen jüngerer Bauart sind oftmals derart ausgebildet, dass sie eine auf ein Bremspedal ausgeübte Pedalbetätigungskraft elektronisch erfassen und anhand der erfassten Pedalbetätigungskraft eine nachfolgende Erzeugung einer Bremskraft in der Bremsanlage beeinflussen oder steuern. So gibt es die Möglichkeit einer Bremskraftverstärkung, bei welcher die auf das Bremspedal ausgeübte Pedalbetätigungskraft in die Bremsanlage eingeleitet und mittels eines BremskraRverstärkers verstärkt wird. Gleichermaßen gibt es Lösungen, bei welchen die auf das Bremspedal ausgeübte Pedalbetätigungskraft im Normalbetrieb der Bremsanlage vollständig dissipiert und die Bremskraft lediglich anhand der erfassten Pedalbetätigungskraft in vollem Umfang von der Bremsanlage erzeugt wird.

Dokument US 2003/0041725 A1 offenbart eine Vorrichtung nach der gattung des Oberbegriffs des Anspruchs 1.

Eine derartige Vorrichtung ist weiterhin beispielsweise aus der EP 1003 658 B1 bekannt. Darin ist ein vollhydraulischer Bremskrafterzeuger vorgesehen, bei welchem anhand eines Wegsensors der Hub der gegenwärtigen Pedalbetätigung erfasst wird, der dann Aufschluss über die aktuelle Pedalbetätigungskraft gibt. Bei der in diesem Stand der Technik gezeigten Lösung ist der Wegsensor im Bereich einer Pedalsimulationsvorrichtung angeordnet. Er muss dazu ausgebildet sein, die Position der Pedaisimulationsvorrichtung über den gesamten möglichen Pedalhub erfassen zu können. Dadurch ist eine entsprechend groß bauende Ausbildung des Wegsensors erforderlich. Dies führt zu einer unerwünschten Vergrößerung der Systems.

Aus der DE 41 30 383 A1 ist femer ein Bremskrafterzeuger bekannt, bei dem ein mit einer Reibungsbremse gekoppeltes Kraftabgabeglied teleskopierbar ausgebildet ist, wobei zwischen zwei teleskopierbaren Komponenten des Kraftabgabeglieds eine Druckmessdose angeordnet ist. Die Druckmessdose soll neben elastizitätsbedingten Dämpfungseigenschaften femer dazu dienen, Messwerte über die von dem Bremskrafterzeuger erzeugte Bremskraft zu liefern, die dann als Rückkopplung einer Regeleinrichtung zum Regeln des Bremskrafterzeugers dienen.

Es ist demgegenüber eine Aufgabe der vorliegenden Erfindung, eine Vorrichtung der eingangs bezeichneten Art bereitzustellen, welche bei kompaktem und kostengünstigem Aufbau eine zuverlässige Ermittlung der Betätigungskraft eines Bremspedals erlaubt.

Diese Aufgabe wird durch eine Vorrichtung mit den Merkmalen des Anspruchs 1 gelöst.

Die erfindungsgemäße Lösung ermöglicht durch die teleskopartige Ausbildung von Kraftaufnahmeglied und Kraftübertragungsglied eine kompakte Bauform. Darüber hinaus kann die verhältnismäßig empfindliche Sensoreinrichtung in den Komponenten Kraftaufnahmeglied und Kraftübertragungsglied gekapselt werden und somit vor die Lebensdauer verkürzenden Umwelteinflüssen besser geschützt werden.

In einer Weiterbildung der Erfindung ist eine Federanordnung vorgesehen, die das Kraftaufnahmeglied und das Kraftübertragungsglied auseinander drängt. Dadurch ist es möglich, die Betätigungskraft anhand des Weges einer Komprimierung der Federanordnung zu ermitteln. Die Federanordnung ist mit einer entsprechend hohen Federhärte auszubilden, um die Federwege gering zu halten. Dadurch kann die Kompaktheit der erfindungsgemäßen Vorrichtung weiter verbessert werden.

In einer Ausführungsvariante sieht die Erfindung vor, dass die Federanordnung eine Kegeldruckfeder umfasst, die in Richtung einer durch deren Zentrum verlaufenden Längsachse komprimierbar ist. Eine derartige Kegeldruckfeder kann von einem spiralförmig verlaufenden Blechstreifen gebildet sein, dessen spiralförmig verlaufende Kanten auf diesen zugeordneten Kegelflächen verlaufen. Derartige Kegeldruckfedern haben den Vorteil, dass sie bei verhältnismäßig kleinem erforderlichen Bauraum und kleinem Federweg hohe Druckkräfte zur Komprimierung erfordern. Darüber hinaus sind derartige Kegeldruckfedern ausgesprochen stabil und unempfindlich bei einem Auf-Block-Setzen. Sie wirken dann als starres Kraftübertragungsglied ohne weitere Federwirkung.

Zusätzlich oder alternativ hierzu kann vorgesehen sein, dass die Federanordnung eine Schraubendruckfeder umfasst. Eine kompakte und unempfindliche Bauform der erfindungsgemäßen Vorrichtung ergibt sich insbesondere dann, wenn die Federanordnung von dem Kraftaufnahmeglied und dem Kraftübertragungsglied gekapselt ist. Alternativ hierzu kann vorgesehen sein, dass die Federanordnung wenigstens eine der Komponenten Kraftaufnahmeglied und Kraftübertragungsglied umgreift.

Um die Vorrichtung zu Gunsten einer erleichterten Montage in ein Bremssystem zu einer stabilen vormontierten Baugruppe zusammenfassen zu können, sieht eine Weiterbildung der Erfindung vor, dass die Federanordnung integral mit einer der Komponenten Kraftaufnahmeglied und Kraftübertragungsglied verbunden ist. beispielsweise durch Verschweißung, Verklebung oder dergleichen Selbstverständlich kann die Federanordnung, auch mit beiden Komponenten Kraftaufnahmeglied und Kraftübertragungsglied verbunden sein.

Hinsichtlich der Sensoreinrichtung kann vorgesehen sein, dass diese einen Näherungssensor, insbesondere einen Hall-Sensor, umfasst Die Verwendung eines Hall-Sensors hat den Vorteil einer einfachen und kostengünstigen Verfügbarkeit.

Um die eingangs angesprochene Relativbewegung zwischen Kraftaufnahmeglied und Kraftübertragungsglied einerseits hubmäßig zu begrenzen und andererseits hinsichtlich ihrer Freiheitsgrade festzulegen, kann erfindungsgemäß femer vorgesehen sein, dass ein Führungsbolzen das Kraftaufnahmeglied quer zu der Richtung der Relativbewegung von Kraftaufnahmeglied und Kraftübertragungsglied durchsetzt und in eine Führungsaussparung in dem Kraftübertragungsgüed in Richtung der Relativbewegung verlagerbar ist. Der Führungsbolzen kann sich somit während einer Relativbewegung zwischen dem Kraftaufnahmeglied und dem Kraftübertragungsglied innerhalb der Führungsaussparung in begrenztem Umfang bewegen. Um bei einer Pedalbetätigung mit einer hohen Betätigungskraft, die gegebenenfalls zu einer maximalen Verschiebung des Führungsbolzens in der Führungsaüssparung führt, ein spürbares Anschlagen des Führungsbolzens an ein Ende der Führungsaussparung zu vermeiden, kann der Führungsbolzen mit einer Beschichtung aus dämpfendem Material, beispielsweise Gummimaterial oder dergleichen, versehen sein. Gleichermaßen ist es erfindungsgemäß möglich, die Bewegung des Führungsbolzens innerhalb der Führungsanpassung anderweitig so zu begrenzen, dass er bei maximaler Auslenkung nicht an das Ende der Führungsanpassung anschlägt. Der Führungsbolzen kann dann auch mit einer reibungsreduzierenden Beschichtung, beispielsweise einem Teflonmantel oder dergleichen, versehen sein.

Die Kompaktheit der erfindungsgemäßen Vorrichtung kann dadurch weiter verbessert werden, dass eine Sensorkomponente der Sensoreinrichtung an einem Sensorträger ausgebildet ist, wobei der Sensorträger an einer Komponente von Kraftaufnahmeglied und Kraftübertragungsglied angebracht und dass eine komplementäre Sensorkomponente der Sensoreinrichtung an der jeweils anderen Komponente von Kraftaufnahmeglied und Kraftübertragungsglied angebracht oder mit dieser koppelbar ist. Der Sensorträger kann beispielsweise in einen für diesen vorgesehenen Schacht an einer der Komponente von Kraftaufnahmeglied und Kraftübertragungsglied eingesetzt werden, so dass dieser bei Montage zwangsläufig in eine vorbestimmte Sollposition gebracht wird. Alternativ oder zusätzlich kann vorgesehen sein, dass der Sensorträger an dem Kraftaufnahmeglied angebracht und vermittels des Führungsbolzens positioniert ist. Ferner ist es möglich, an dem Sensorträger die Sensorkomponente fest anzubringen und die komplementäre Sensorkomponente relativ zur Sensorkomponente beweglich zu führen. Bei einer Pedalbetätigung kann dann die komplementäre Sensorkomponente durch Herstellung einer mechanischen Kopplung mit dem sich bewegenden Kraftaufnahmeglied oder Kraftüberhagungsglied relativ zur Sensorkomponente verlagert werden und dabei die Bewegung erfasst werden.

Mit der Erfindung ist es möglich, anhand der von der Sensoreinrichtung ausgegebenen Signale verschiedene Komponenten einer Fahrzeugbremsanlage anzusteuern. So kann beispielsweise eine Bremsleuchte aktiviert werden sobald die Sensoreinrichtung eine bestimmte Mindestauslenkung detektiert. Ferner kann auch ein ESP- (Elektronisches Stabilitätsprogramm) System oder ein ACC (Autonomous Cruise Control) - System anhand der mit der Erfindung erfassten Betätigungskraft angesteuert werden, wobei dann zusätzliche Drucksensoren entfallen können.

Die Erfindung betrifft femer ein Krafteingangsglied einer Bremsanlage eines Fahrzeugs zur Einleitung einer auf ein Bremspedal ausgeübten Pedalbetädgungskraft in die Bremsanlage, wobei das Krafteingangsglied eine Vorrichtung nach der vorstehend beschriebenen Art umfasst. Beispielsweise kann das Krafteingangsglied zweigeteilt sein, nämlich in das Kraftaufnahmeglied und das relativ zu diesem verlagerbaren Kraftübertragungsglied.

Die Erfindung betrifft darüber hinaus eine Fahrzeugbremsanlage, welche mit einer Vorrichtung gemäß der vorstehend beschriebenen Art ausgebildet ist.

Im folgenden wird die Erfindung beispielhaft anhand der beiliegenden Figuren erläutert. Es stellen dar:
- Fig. 1: eine perspektivische Teilschnittansicht einer erfindungsgemäßen Vorrichtung;
- Fig. 2: eine Schnittansicht entsprechend dem Schnitt II-II aus Fig. 1;
- Fig. 3: eine Schnittansicht entsprechend dem Schnitt III-III in Fig. 1 und
- Fig. 4: eine Teilschnittansicht eines zweiten Ausführungsbeispiel der erfindungsgemäßen Vorrichtung.

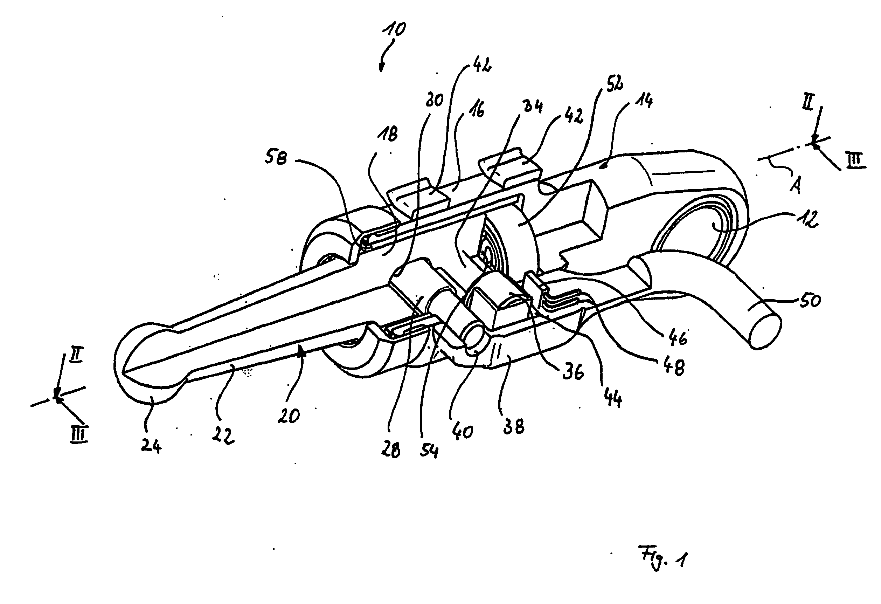

In Fig. 1 ist eine erfindungsgemäße Vorrichtung in Form eines Krafteingangsglieds einer Bremsanlage für ein Fahrzeug dargestellt und allgemein mit 10 bezeichnet. Die Vorrichtung 10 ist über ein Aufnahmeauge 12 an ein nicht dargestelltes Bremspedal angekoppelt. Das Aufnahmeauge 12 ist in einem freien Ende eines Kraftaufnahmeglieds 14 ausgebildet. Das Kraftaufnahmeglied 14 weist an seinem anderen Ende einen hohlzylindrischen Abschnitt 16 auf. In diesen hohlzylindrischen Abschnitt erstreckt sich ein zylindrisches Ende 18 eines Kraftübertragungsglieds 20. Das Kraftübertragungsglied 20 weist einen Schaft 22 auf, welcher an seinem freien Ende bei 24 sphärisch ausgebildet ist. Das sphärische Ende 24 ist mit der Bremsanlage, beispielsweise mit einem Bremskraftverstärker, verbunden.

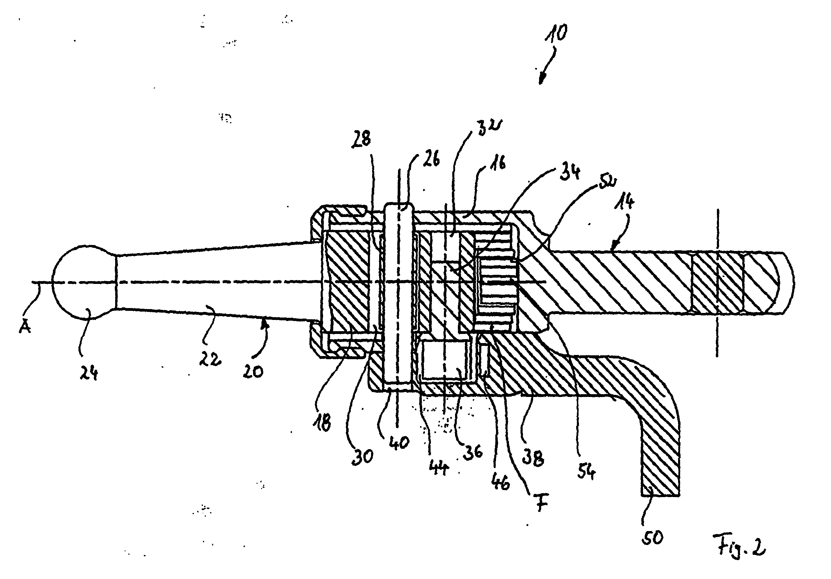

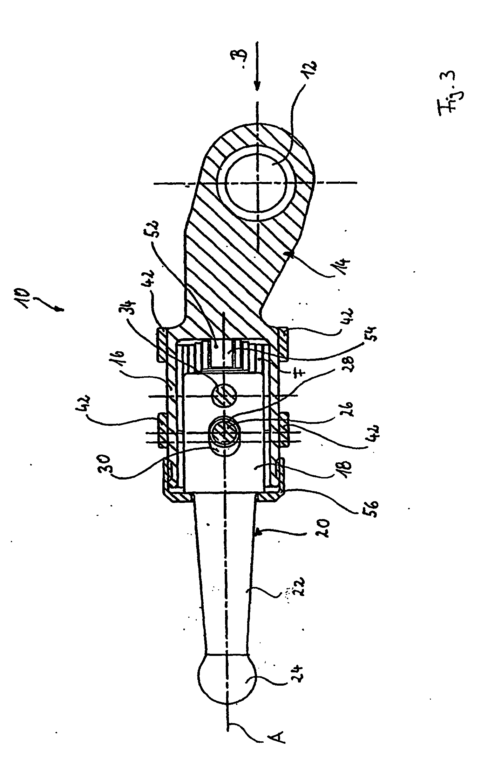

Zur weiteren Beschreibung der Vorrichtung 10 wird zusätzlich auf die Schnittdarstellungen gemäß Figuren 2 und 3 verwiesen.

Der hohlzylindrische Abschnitt 16 wird von einem in dessen Wänden festgelegten Führungsbolzen 26 durchsetzt. Dieser weist in seinem innerhalb des hohlzylindrischen Abschnitts 16 verlaufenden Bereich eine reibungsmindemde Teflonhülse 28 auf. Der Führungsbolzen 26 erstreckt sich durch eine korrespondierende in Richtung der Längsachse A ausgedehnte Führungsaussparung 30 innerhalb des massiven zylindrischen Endes 18 des Kraftübertragungsglieds 20 hindurch. Dadurch lässt sich das Kraftübertragungsglied 20 in axialer Richtung relativ zu dem Kraftaufnahmeglied 14 reibungsarm in dem Maße verlagern, in welchem der Führungsbolzen 26 innerhalb der Führungsaussparung 30 verlagerbar ist

Das zylindrische Ende 18 weist eine weitere im Wesentlichen orthogonal zu der Längsachse A verlaufende Aussparung 32 auf. In diese Aussparung 32 ist ein Trägerbolzen 34 eingesetzt, welcher an seinem aus der Aussparung 32 herausragenden Ende einen Permanentmagneten 36 trägt.

Der Führungsbolzen 26 ragt einenends über den hohlzylindrischen Abschnitt 16 hinaus. Auf dieses aus dem hohlzylindrischen Abschnitt 16 herausragende Ende ist ein Sensorträger 38 aufgesteckt. Der Sensorträger 38 weist hierzu eine Bohrung 40 auf, deren Innendurchmesser auf den Außendurchmesser des Bolzens 26 abgestimmt ist, so dass sich der Sensorträger 38 durch das Aufstecken auf den Bolzen 26 in Richtung der Längsachse A positionieren lässt. Der Sensorträger 38 weist femer Schnapparme 42 auf, mit welchen er den Außenumfang des hohlzylindrischen Abschnitts 16 des Kraftaufnahmeglieds 14 umgreift. Der Sensorträger 38 ist mit einer Aussparung 44 ausgebildet; in welcher sich der mit dem Kraftübertragungsglied 20 mit bewegende Permanentmagnet 36 in gleichem Umfang bewegen kann, wie sich das Kraftübertragungsglied 20 aufgrund des Zusammenwirkens des Führungsbolzens 26 und der Führungsaussparung 30 relativ zu dem Kraftaufnahmeglied 14 bewegen kann. In den Sensorträger 38 ist ein Sensorelement 46 integriert, welches über Leitungen 48 mit einer nicht gezeigten elektronischen Steuereinheit gekoppelt ist. Die Leitungen 48 werden über ein in den Figuren lediglich schematisch gezeigtes Leitungsrohr 50 von der Vorrichtung 10 weggeführt.

Zwischen dem zylindrischen Ende 18 des Kraftübertragungsglieds 20 und dem in den Figuren 1 bis 3 diesem gegenüberliegenden Boden des Hohlraums des hohlzylinddschen Abschnitts 16 ist eine Kegeldruckfeder 52 vorgesehen.

Die Kegeldruckfeder 52 ist aus einem Streifen aus Material mit hoher Federsteifigkeit, beispielsweise aus Federstahl, hergestellt. Der Streifen weist einen im Wesentlichen rechteckigen Querschnitt auf, welcher ausgehend von einem im Bereich der Längsachse A liegenden zentralen Abschnitt 54 spiralförmig gekrümmt ist. Betrachtet man Figuren 2 und 3 so erkennt man, dass die Spirale, die von einer bestimmten Niveaulinie, beispielsweise der neutralen Faser F des Streifens, beschrieben wird, nicht in einer Ebene liegt, sondern vielmehr auf einer Kegelfläche spiralförmig verläuft Eine derartige Ausbildung der Kegeldruckfeder 52 ermöglicht eine Komprimierung durch Eindrücken des zentralen Abschnitts 54 in axialer Richtung zu dem zylindrischen Ende 18 des Kraftübertragungsglieds 20 hin. Die Kegeldruckfeder 52 lässt zwar nur verhältnismäßig kleine Federwege zu, nämlich lediglich in dem Maße, wie sich der zentrale Abschnitt 54 in axialer Richtung auf das zylindrische Ende 18 eindrücken lässt. Für eine derartige Komprimierung sind jedoch sehr hohe Federkräfte erforderlich. Darüber hinaus besitzt die Kegeldruckfeder 52 den Vorteil, dass sie verhältnismäßig unempfindlich gegenüber hohen Kräften ist. Sobald sie durch eine hohe Pedalbetätigungsicraft auf Block gesetzt wird, wirkt sie als starres Kraftübertragungsglied. Wird die Pedalbetätigungskraft auf Null reduziert, so entspannt sich die Kegeldruckfeder 52 wieder und nimmt Ihre ursprüngliche Form ein.

Es ist noch anzumerken, dass der Hohlraum des hohlzylindrischen Abschnitts 16 mit einer Muffe 56 gekapselt ist, welche auf das freie Ende des hohlzylindrischen Abschnitts 16 aufgeschraubt ist und welche eine zentrale Öffnung aufweist, durch die der Schaft 22 des Kraftübertragungsglieds 20 hindurch ragt. Schließlich ist darauf hinzuweisen, dass das Kraftübertragungsglied 20 über eine Lagerbuchse 58 aus reibungsmindemdem Material, beispielsweise Teflon, in dem hohlzylindrischen Abschnitt 16 spielarm und reibungsarm geführt ist.

Im Betrieb der Vorrichtung 10 wirkt auf das Kraftaufnahmeglied 14 eine Pedalbetätigungskraft B und drückt dieses in Richtung des Kraftüberhagungsglieds 20. Dabei wird die Kegeldruckfeder 52 nach Maßgabe der Größe der Pedalbetätigungskraft B komprimiert. Somit kommt es zu einer Annäherung von Kraftaufnahmeglied 14 und Kraftübertragungsglied 20 und damit zu einer Annäherung des Permanentmagneten 36 an das Sensorelement 46. Das Sensorelement 46 erfasst die Annäherung des Permanentmagneten 36, beispielsweise durch Erfassung eines Hall-Effekts, und sendet ein entsprechendes Ausgangssignal über die Leitungen 48 an die nicht gezeigte Steuereinheit. Diese ermittelt anhand der erfassten Daten unter Berücksichtigung der Federhärte der Kegeldruckfeder 52 die gegenwärtig an dem Kraftaufnahmeglied 14 anliegende Pedalbetätigungskraft B und steuert in entsprechender Weise eine nicht gezeigte Fahrzeugbremsanlage an. Je nach zurückgelegtem Federweg der Kegeldruckfeder 52 erzeugt dann die Fahrzeugbremsanlage eine zur Abbremsung des Fahrzeugs dienende Bremskraft.

Nach Freigabe des Bremspedals, das heißt nach Reduzierung der Pedalbetätigungskraft B auf den Betrag Null entspannt sich die Kegeldruckfeder 52 wieder, soweit möglich, und die Vorrichtung 10 nimmt die in den Figuren 1 bis 3 gezeigte Ausgangsstellung ein.

Figur 2 zeigt nun ein zweites Ausführungsbeispiel der erfindungsgemäßen Vorrichtung. Zur Vermeidung von Wiederholungen und zur vereinfachten Beschreibung werden für gleich wirkende oder gleichartige Komponenten die selben Bezugszeichen wie bei der Beschreibung des ersten Ausführungsbeispiels gemäß den Figuren 1 bis 3 verwendet, jedoch mit der Ziffer "1" vorangestellt. Im Folgenden sollen lediglich die Unterschiede zu dem ersten Ausführungsbeispiel gemäß Figuren 1 bis 3 erläutert werden.

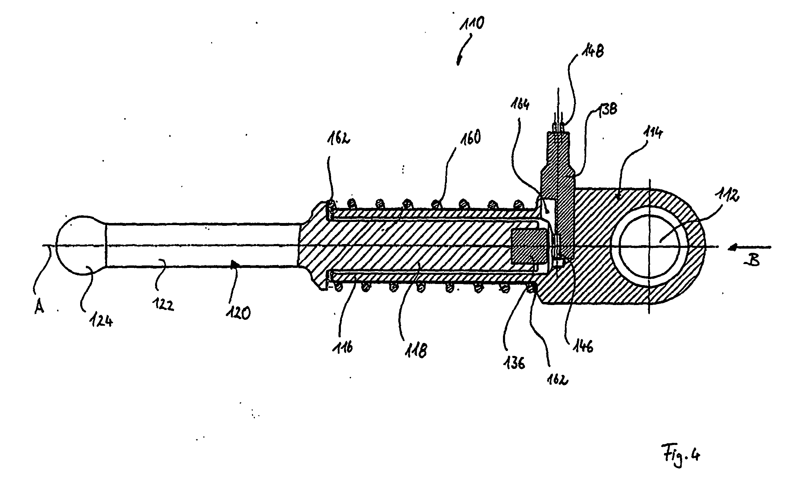

Die Vorrichtung 110 gemäß dem zweiten Ausführungsbeispiel nach Figur 4 ist insgesamt kompakter ausgebildet als die Vorrichtung gemäß dem ersten Ausführungsbeispiel. Der.hohlzylindrische Abschnitt 116 ist in seinem Durchmesser reduziert und nimmt das ebenfalls durchmesserreduzierte zylindrische Ende 18 in sich auf. Auf den hohlzylindrischen Abschnitt 16 ist eine Schraubendruckfeder 160 aufgesetzt, welche an ihren Enden jeweils über Punktverschweißungen 162 mit den Komponenten Kraftaufnahmeglied 114 und Kraftübertragungsglied 120 verschweißt ist.
Dadurch werden die beiden Komponenten Kraftaufnahmeglied 114 und Kraftübertragungsglied 120 als kompakte Baugruppe zusammen gehalten. Dennoch behält die Druckfeder 160 ihre Federwirkung und ermöglich ein teleskopisches Einschieben des zylindrischen Endes 118 des Kraftübertragungsglieds 120 in den hohlzylindrischen Abschnitt 116 des Kraftaufnahmeglieds 114.

Bei dem zweiten Ausführungsbeispiel gemäß Figur 4 ist darüber hinaus ein Permanentmagnet 136 im Bereich des Stirnfläche des zylindrischen Endes 118 ausgebildet. Das zu dem Permanentmagneten komplementäre Sensorelement 146 ist an dem Ende des Sensorträgers 138 zentral in dem Kraftaufnahmeglied 114 angebracht. Der Sensorträger 138 ist in einen Schaft 164 eingeführt, wo er vorpositioniert werden kann.

Im Übrigen funktioniert die Vorrichtung 110 gemäß dem zweiten Ausführungsbeispiel entsprechend dem ersten Ausführungsbeispiel gemäß Figuren 1 bis 3. Dies bedeutet, dass eine Relativbewegung zwischen dem Kraftaufnahmeglied 114 und dem Kraftübertragungsglied 120 über die Sensoreinrichtung 146 anhand einer Verlagerung des Permanentmagnets 136 erfasst und an eine nicht gezeigte Steuereinrichtung zur Steuerung der Bremsanlage weitergeleitet wird.

Die vorstehend beschriebenen Ausführungsformen zeigen ein Krafteingangsglied für eine Fahrzeugbremsanlage, welches einen verhältnismäßig kompakten Aufbau aufweist und mit welchem eine Pedalbetätigungskraft zuverlässig erfasst werden kann.

Die Vorteile der Erfindung liegen insbesondere in deren Kompaktheit, deren Möglichkeit zur Bereitstellung einer vormontierten Baugruppe und deren einfachen und damit kostengünstigen Aufbau. Es ist darauf hinzuweisen, dass die vorstehend beschriebenen Ausführungsbeispiele nicht beschränkend sein sollen. So ist es beispielsweise möglich, die beschriebenen Federelemente, wie die Kegeldruckfeder 52 bzw. die Schraubendruckfeder 160 durch gleichwirkende Federelemente zu ersetzen, beispielsweise durch Tellerfederpakete, einen Federbalg oder eine Federbuchse, welche sich federelastisch in axialer Richtung komprimieren lassen.

## Patentansprüche

1. Vorrichtung (10; 110) zum Erfassen einer Betätigungskraft (B) eines Bremspedals, mit einem mit dem Bremspedal gekoppelten Kraftaufnahmeglied (14; 114) und einem relativ zu dem Kraftaufnahmeglied (14; 114) bewegbaren mit einer Bremsanlage gekoppelten Kraftübertragungsglied (20; 120) und mit einer als Näherungssensor ausgebildeten Sensoreinrichtung (36, 46; 136, 146) zur Erfassung wenigstens eines die Betätigungskraft (B) charakterisierenden Parameters, wobei das Kraftaufnahmeglied (14; 114) und das Kraftübertragungsglied (20; 120) teleskopisch zueinander verlagerbar sind und wobei die Sensoreinrichtung (36, 46; 136, 146) durch das Kraftaufnahmeglied (14; 114) und das Kraftübertragungsglied (20; 120) gekapselt ist,
**dadurch gekennzeichnet, dass** die Sensoreinrichtung (36, 46; 136, 146) derart zwischen dem Kraftaufnahmeglied (14; 114) und dem Kraftübertragungsglied (20; 120) angeordnet ist, dass sich zwei Komponenten der Sensoreinrichtung (36, 46; 136, 146) bei einer eremspedalbetätigung nach Maßgabe der teleskopischen Verlagerung von Kraftaufnahmeglied (14; 114) und Kraftübertragungsglied (20; 120) axial einander annähern.

2. Vorrichtung (10; 110) nach Anspruch 1,
**dadurch gekennzeichnet dass** eine Federanordnung (52; 160) vorgesehen ist, die das Kraftaufnahmeglied (14; 114) und das Kraftübertragungsglied (20, 120) auseinander drängt.

3. Vorrichtung (10) nach Anspruch 2,
**dadurch gekennzeichnet, dass** die Federanordnung eine Spiraldruckfeder (52) umfasst, die in Richtung einer durch deren Zentrum verlaufenden Längsachse (A) komprimierbar ist.

4. Vorrichtung (110) nach Anspruch 2 oder 3,
**dadurch gekennzeichnet, dass** die-Federanordnung eine Schraubendruckfeder (160) umfasst.

5. Vorrichtung (10) nach einem der Ansprüche 2 bis 4,
**dadurch gekennzeichnet, dass** die Federanordnung (52) von dem Kraftaufnahmeglied (14) und dem Kraftübertragungsglied (20) gekapselt ist.

6. Vorrichtung (110) nach einem der Ansprüche 2 bis 5,
**dadurch gekennzeichnet, dass** die Federanordnung (160) wenigstens eine der Komponenten Kraftaufnahmeglied (114) und Kraftübertragungsglied (120) umgreift.

7. Vorrichtung (110) nach einem der Ansprüche 2 bis 6,
**dadurch gekennzeichnet, dass** die Federanordnung (160) integral mit einer der Komponenten Kraftaufnahmeglied (114) und Kraftübertragungsglied (120) verbunden ist.

8. Vorrichtung (10; 110) nach einem der vorangehenden Ansprüche,
**dadurch gekennzeichnet, dass** die Sensoreinrichtung (36, 46; 136, 146) einen Hall-Sensor umfasst.

9. Vorrichtung (10) nach einem der vorangehenden Ansprüche,
**dadurch gekennzeichnet, dass** ein Führungsbolzen (26) das Kraftaufnahmeglied (14) quer zu der Richtung (A) der Relativbewegung von Kraftaufnahmeglied (14) und Kraftübertragungsglied (20) durchsetzt und in einer Führungsaussparung (30) in dem Kraftübertragungsglied (20) in Richtung (A) der Relativbewegung verlagerbar ist.

10. Vorrichtung (10; 110) nach einem der vorangehenden Ansprüche,
**dadurch gekennzeichnet, dass** eine Sensorkomponente (46; 146) der Sensoreinrichtung (36, 46; 136, 146) an einem Sensorträger (38; 138) ausgebildet ist, wobei der Sensorträger (38; 138) an einer Komponente von Kraftaufnahmeglied (14; 114) und Kraftübertragungsglied (20; 120) angebracht ist, und dass eine komplementäre Sensorkomponente (36; 136) der Sensoreinrichtung an der jeweils anderen Komponente von Kraftaufnahmeglied (14, 114) und Kraftübertragungsglied (20; 120) angebracht oder mit dieser koppelbar ist.

11. Vorrichtung (10) nach Anspruch 9 und 10,
**dadurch gekennzeichnet, dass** der Sensorträger (38) an dem Kraftaufnahmeglied (14) angebracht und vermittels des Führungsbolzens (26) positioniert ist.

12. Vorrichtung (10; 110) nach einem der vorangehenden Ansprüche,
**dadurch gekennzeichnet, dass** die maximale Verlagerung des Kraftaufnahmeglieds (14; 114) relativ zu dem Kraftübertragungsglied (20; 120) durch einen Anschlag begrenzt ist.

13. Fahrzeugbremsanlage, umfassend ein Bremspedal zum Ausüben einer Pedalbetätigungskraft und einen Bremskrafterzeuger oder einen Bremskraftverstärker zum Erzeugen oder Verstärken einer Bremskraft nach Maßgabe der auf das Bremspedal ausgeübten Pedalbetäbgungskraft, **gekennzeichnet durch** eine Vorrichtung (10; 110) nach einem der Ansprüche 1 bis 12, wobei die Vorrichtung (10; 110) zwischen dem Bremspedal und dem Bremskrafterzeuger oder dem Bremskraftverstärker angeordnet ist.

## Claims

1. Device (10; .110) for the detection of an actuation force (B) of a brake pedal, comprising a force take-up element (14; 114) coupled to the brake pedal, and a force-transmitting element (20; 120) which is coupled to a brake system and is movable relative to the force take-up element (14; 114), and comprising a sensor device (36, 46; 136; 146), realized as a proximity sensor, for the detection of at least one parameter characterizing the actuation force (B), the force take-up element (14; 114)) and the force-transmitting element (20; 120),
**characterized in that** the sensor device (36, 46; 136, 146) is disposed between the force take-up element (14; 114) and the force-transmitting element (20; 120) in such a way that, upon a brake-pedal actuation, two components of the sensor device (36, 46; 136, 146) axially approach each other, according to the telescopic displacement of force take-up element (14; 114) and force-transmitting element (20; 120).

2. Device (10; 110) according to Claim 1,
**characterized in that** a spring arrangement (52; 160) is provided which forces the force take-up element (14; 114) and the force-transmitting element (20, 120) apart from one another.

3. Device (10) according to Claim 2,
**characterized in that** the spring arrangement comprises a spiral compression spring (52) which is compressible in the direction of a longitudinal axis (A) running through its centre.

4. Device (110) according to Claim 2 or 3,
**characterized in that** the spring arrangement comprises a helical compression spring (160).

5. Device (10) according to any one of Claims 2 to 4,
**characterized in that** the spring arrangement (52) is encased by the force take-up element (14) and the force-transmitting element (20).

6. Device (110) according to one of Claims 2 to 5,
**characterized in that** the spring arrangement (160) encompasses at least one of the components force take-up element (114) and force-transmitting element (120).

7. Device (110) according to one of Claims 2 to 6, **characterized in that** the spring arrangement (160) is integrally connected to one of the components force take-up element (114) and force-transmitting element (120).

8. Device (10; 110) according to one of the preceding Claims,
**characterized in that** the sensor device (36, 46; 136, 146) comprises a Hall sensor.

9. Device (10) according to one of the preceding Claims,
**characterized in that** a guide pin (26) passes through the force take-up element (14) transversely relative to the direction (A) of the relative movement of force take-up element (14) and force-transmitting element (20), and is displaceable in a guide recess (30) in the force-transmitting element (20) in the direction (A) of the relative movement.

10. Device (10; 110) according to one of the preceding Claims,
**characterized in that** a sensor component (46; 146) of the sensor device (36, 46; 136, 146) is realized on a sensor carrier (38; 138), the sensor carrier (38; 138) being mounted on a component of force take-up element (14; 114) and force-transmitting element (20; 120), and **in that** a complementary sensor component (36; 136) of the sensor device is mounted on the respectively other component of force take-up element (14, 114) and force-transmitting element (20; 120), or can be coupled to same.

11. Device (10) according to Claims 9 and 10,
**characterized in that** the sensor carrier (38) is mounted on the force take-up element (14) and is positioned by means of the guide pin (26).

12. Device (10; 110) according to one of the preceding Claims,
**characterized in that** the maximum displacement of the force take-up element (14; 114) relative to the force-transmitting element (20; 120) is limited by a stop.

13. Vehicle brake system, comprising a brake pedal for exerting a pedal actuation force, and a braking-force generator or a brake booster for generating or boosting a braking force according to the pedal actuation force exerted on the brake pedal, **characterized by** a device (10; 110) according to one of Claims 1 to 12, the device (10; 110) being disposed between the brake pedal and the braking-force generator or the brake booster.

## Revendications

1. Dispositif (10 ; 110) pour saisir une force d'actionnement (B) d'une pédale de frein, comprenant un élément de réception de force (14 ; 114) couplé à la pédale de frein et un élément de transmission de force (20 ; 120) mobile par rapport à l'élément de réception de force (14 ; 114) et couplé à une installation de freinage et un dispositif capteur (36, 46 ; 136, 146) conçu comme détecteur de proximité pour la saisie d'au moins un paramètre représentatif de la force d'actionnement (B), l'élément de réception de force (14 ; 114) et l'élément de transmission de force (20 ; 120) pouvant être déplacés de façon télescopique l'un par rapport à l'autre et le dispositif capteur (36, 46 ; 136, 146) étant encapsulé par l'élément de réception de force (14 ; 114) et l'élément de transmission de force (20 ; 120),
**caractérisé en ce que** le dispositif capteur (36, 46 ; 136, 146) est disposé entre l'élément de réception de force (14 ; 114) et l'élément de transmission de force (20 ; 120), de telle sorte que deux composants du dispositif capteur (36, 46 ; 136, 146) se rapprochent axialement l'un de l'autre lors d'un actionnement de pédale de frein selon le déplacement télescopique de l'élément de réception de force (14 ; 114) et de l'élément de transmission de force (20 ; 120).

2. Dispositif (10 ; 110) selon la revendication 1,
**caractérisé en qu'**il est prévu un agencement de ressort (52 ; 160) qui écarte l'élément de réception de force (14 ; 114) et l'élément de transmission de force (20; 120).

3. Dispositif (10) selon la revendication 2,
**caractérisé en ce que** l'agencement de ressort comprend un ressort de pression spirale (52) qui peut être comprimé en direction d'un axe longitudinal (A) passant par son centre.

4. Dispositif (110) selon la revendication 2 ou 3,
**caractérisé en ce que** l'agencement de ressort comprend un ressort de pression hélicoïdal (160).

5. Dispositif (10) selon l'une quelconque des revendications 2 à 4,
**caractérisé en ce que** l'agencement de ressort (52) est encapsulé par l'élément de réception de force (14) et l'élément de transmission de force (20).

6. Dispositif (110) selon l'une quelconque des revendications 2 à 5,
**caractérisé en ce que** l'agencement de ressort (160) entoure au moins un des composants élément de réception de force (114) et élément de transmission de force (120).

7. Dispositif (110) selon l'une quelconque des revendications 2 à 6,
**caractérisé en ce que** l'agencement de ressort (160) est relié intégralement à l'un des composants élément de réception de force (114) et élément de transmission de force (120).

8. Dispositif (10 ; 110) selon l'une quelconque des revendications précédentes,
**caractérisé en ce que** le dispositif capteur (36, 46 ; 136, 146) comprend un capteur à effet Hall.

9. Dispositif (10) selon l'une quelconque des revendications précédentes,
**caractérisé en ce qu'**un boulon de guidage (26) traverse l'élément de réception de force (14) transversalement à la direction (A) du déplacement relatif de l'élément de réception de force (14) et de l'élément de transmission de force (20) et peut être déplacé dans un évidement de guidage (30) dans l'élément de transmission de force (20) en direction (A) du déplacement relatif.

10. Dispositif (10 ; 110) selon l'une quelconque des revendications précédentes,
**caractérisé en ce qu'**un composant de capteur (46 ; 146) du dispositif capteur (36, 46 ; 136, 146) est réalisé sur un support de capteur (38 ; 138), le support de capteur (38 ; 138) étant placé sur un composant de l'élément de réception de force (14, 114) et de l'élément de transmission de force (20 ; 120), et **en ce qu'**un composant de capteur (36 ; 136) complémentaire du dispositif capteur est placé sur l'autre composant respectif de l'élément de réception de force (14 ; 114) et de l'élément de transmission de force (20 ; 120) ou peut être couplé à celui-ci.

11. Dispositif (10) selon les revendications 9 et 10,
**caractérisé en ce que** le support de capteur (38) est placé sur l'élément de réception de force (14) et est positionné au moyen du boulon de guidage (26).

12. Dispositif (10 ; 110) selon l'une quelconque des revendications,
**caractérisé en ce que** le déplacement maximal de l'élément de réception de force (14 ; 114) par rapport à l'élément de transmission de force (20 ; 120) est limité par une butée.

13. Installation de freinage de véhicule, comprenant un pédale de frein pour exercer une force d'actionnement de pédale et un générateur de force de freinage ou un amplificateur de force de freinage pour générer ou amplifier une force de freinage en fonction de la force d'actionnement du pédale exercée sur la pédale de frein,
**caractérisé par** un dispositif (10 ; 110) selon l'une quelconque des revendications 1 à 12, le dispositif (10 ; 110) étant disposé entre la pédale de frein et le générateur de force de freinage ou l'amplificateur de force de freinage.
